# EUROPÄISCHE PATENTSCHRIFT

(11) **EP 4 210 461 B1**
(45) Veröffentlichungstag und Bekanntmachung des Hinweises auf die Patenterteilung: **19.11.2025**
(21) Anmeldenummer: 21773710.5
(22) Anmeldetag: 06.09.2021
(51) Int. Cl.: A01B 3/46, A01B 15/14

(54) **AUFSATTELDREHPFLUG**
SEMIMOUNTED TURN-ABOUT PLOUGH
CHARRUE SEMI-PORTÉE BRABANT

(30) Priorität: 10.09.2020 DE 102020123598; 11.09.2020 DE 102020123706
(43) Veröffentlichungstag der Anmeldung: 19.07.2023
(73) Patentinhaber: Amazonen-Werke H. Dreyer SE & Co. KG, 49205 Hasbergen (DE)
(72) Erfinder: REHNEN, Pascal, 49328 Melle (DE); WARNECKE, Christoph, 49152 Bad Essen (DE); WILKEN, Martin, 26131 Oldenburg (DE)
(86) Internationale Anmeldenummer: PCT/EP2021/074460
(87) Internationale Veröffentlichungsnummer: WO 2022/053425

(56) Entgegenhaltungen:
- EP-A1- 0 173 400
- EP-A1- 1 731 009
- EP-A1- 3 698 612

## Beschreibung

Die Erfindung betrifft einen Aufsatteldrehpflug gemäß dem Oberbegriff des Patentanspruches 1.

Es sind derartige Aufsatteldrehpflüge wie z.B. aus EP3698612A1 bekannt, die einen Anbaubock zum Anbau an eine Zugmaschine aufweisen und sowohl eine Furchenarbeitsposition als auch eine Onland-Arbeitsposition einnehmen können. Der Anbaubock ist hierbei mit einem Stabilisator verbunden. Ein Pflugrahmen, der zwei gegenüberliegend angeordnete Pflugkörperreihen trägt, ist wiederum um eine liegende Wendeachse drehbar am Stabilisator angeordnet, so dass er gewendet werden kann. Hierzu sind zwischen dem Pflugrahmen und dem Stabilisator ein Wendearm und zwei Schwingen, eine Versatzschwinge und eine Vorderfurchenschwinge, vorgesehen. Der Wendearm ist mit seinem einen Ende drehbar um die liegende Wendeachse am Stabilisator befestigt und mit seinem freien Ende drehbar mit der Versatzschwinge verbunden. Die Vorderfurchenschwinge ist einerseits gelenkig mit der Versatzschwinge und andererseits drehbar mit dem Pflugrahmen verbunden.

Zur Verbringung zwischen der Furchenarbeitsposition und der Onland-Arbeitsposition und zur Einstellung verschiedener Arbeitseinstellungen, wie Vorderfurchenbreite bzw. dem Abstand zwischen der Reifenkante der Zugmaschine und der Furchenkante, umfassen derartige Aufsatteldrehpflüge einen Verstellaktor. Die Versatzschwinge und die Vorderfurchenschwinge sind durch den Verstellaktor in unterschiedliche Querabstände zwischen dem Anbaubock und dem in Fahrtrichtung vordersten Pflugkörper bewirkende Stellungen verbringbar. Der Wechsel zwischen Furchenarbeitsposition und Onland-Arbeitsposition gestaltet sich bei bisher bekannten Aufsatteldrehpflügen aufwendig und zeitintensiv, da entweder der Verstellaktor für die jeweilige Arbeitsposition an unterschiedlichen Stellen an der Versatzschwinge oder Vorderfurchenschwinge zu befestigen ist oder die Stellung der Versatzschwinge zur Vorderfurchenschwinge manuell zu verriegeln ist. Ferner weisen derartige Aufsatteldrehpflüge somit einen eingeschränkten Einstellbereich die unterschiedlichen Querabstände bewirkenden Stellungen der Versatzschwinge und Vorderfurchenschwinge betreffend auf.

Der vorliegenden Erfindung liegt die Aufgabe zugrunde, einen diesbezüglich verbesserten Aufsatteldrehpflug zu schaffen, der insbesondere einfach, und vorzugsweise fernbedient, zwischen der Furchenarbeitsposition und der Onland-Arbeitsposition verstellbar ist.

Diese Aufgabe wird durch einen Aufsatteldrehpflug gemäß Anspruch 1 gelöst. Bevorzugte Ausgestaltungen der Erfindung sind Gegenstand der abhängigen Ansprüche.

Es ist vorgesehen, dass der Aufsatteldrehpflug einen Versatzaktor umfasst mittels dem die Versatzschwinge und die Vorderfurchenschwinge unabhängig von der Hubstellung des Verstellaktors in unterschiedliche Querabstände zwischen dem Anbaubock und dem in Fahrtrichtung vordersten Pflugkörper bewirkende Stellungen verbringbar sind.

Dadurch, dass der Versatzaktor und der Verstellaktor unabhängig voneinander betätigbar sind, also der jeweils eine Aktor ungeachtet der Hubstellung und/oder Betätigung des jeweils anderen Aktor betätigbar ist, lassen sich die Versatzschwinge und die Vorderfurchenschwinge in größere und/oder kleinere Querabstände zwischen dem Anbaubock und dem in Fahrtrichtung vordersten Pflugkörper bewirkende Stellungen verbringen, als dies bei bisher bekannten Aufsatteldrehpflügen der Fall ist. Die unabhängige Betätigbarkeit von Versatzaktor und Verstellaktor bedingen, dass ihre Einstellbereiche sich kombinieren lassen. Infolge dieser Maßnahme weist der Aufsatteldrehpflug somit einen erweiterten Einstellbereich die unterschiedlichen Querabstände bewirkenden Stellungen der Versatzschwinge und Vorderfurchenschwinge betreffend auf. Querabstände bewirkende Stellungen der Versatzschwinge und Vorderfurchenschwinge, die zuvor nur durch Umstecken des Verstellaktors und/oder Verriegeln der beiden Schwingen erreichbar waren, lassen sich somit fernbedient einstellen, so dass der erfindungsgemäße Aufsatteldrehpflug sich in einfacher und zeitsparender Weise zwischen der Furchenarbeitsposition und der Onland-Arbeitsposition verbringen lässt. Vorteilhaft ist hierbei, dass erfindungsgemäß nun zwei Aktoren zur Verstellung der Versatzschwinge und Vorderfurchenschwinge vorgesehen sind, so dass eine Mehrzahl unterschiedlicher Stellungen einstellbar ist.

In einer vorteilhaften Weiterbildung der Erfindung ist vorgesehen, dass der Versatzaktor zwischen dem Wendearm, insbesondere dem drehbar mit der Versatzschwinge verbundenen Ende des Wendearms, und der Versatzschwinge, insbesondere dem gelenkig mit der Vorderfurchenschwinge verbundenen Ende der Versatzschwinge, angeordnet ist. Der Versatzaktor wirkt somit primär auf die Stellung der Versatzschwinge zum Wendearm ein, welche wiederum über die drehbare Verbindung zwischen Versatzschwinge und Vorderfurchenschwinge sekundär die Stellung der Vorderfurchenschwinge zum Pflugrahmen bewirkt. Infolge dieser Weiterbildung ist die Ausrichtung der Versatzschwinge zum Stabilisator einstellbar. Insbesondere ist der Querabstand zwischen dem gelenkig mit der Vorderfurchenschwinge verbundenen Ende der Versatzschwinge und dem Anbaubock einstellbar.

In einer weiteren vorteilhaften Ausführungsform des erfindungsgemäßen Aufsatteldrehpfluges ist der Verstellaktor zwischen dem Wendearm, insbesondere einem um eine in Fahrtrichtung liegende Achse drehbar mit dem Stabilisator verbundenen Ende des Wendearms, und der Vorderfurchenschwinge, insbesondere dem drehbar mit dem Pflugrahmen verbundenen Ende der Vorderfurchenschwinge, angeordnet ist. In einer alternativen Ausführungsform ist denkbar, dass der Verstellaktor zwischen der Versatzschwinge, insbesondere dem gelenkig mit der Vorderfurchenschwinge verbundenen Ende der Versatzschwinge, und der Vorderfurchenschwinge, insbesondere dem drehbar mit dem Pflugrahmen verbundenen Ende der Vorderfurchenschwinge, angeordnet ist. Der Verstellaktor wirkt somit primär auf die Stellung der Vorderfurchenschwinge zur Versatzschwinge ein, welche wiederum über die gelenkige Verbindung zwischen Vorderfurchenschwinge und Versatzschwinge sekundär die Stellung der Versatzschwinge zum Wendearm bewirkt. Infolge dieser Weiterbildung ist die Stellung der Vorderfurchenschwinge zum Pflugrahmen einstellbar. Insbesondere ist der Querabstand zwischen dem drehbar mit dem Pflugrahmen verbundenen Ende der Vorderfurchenschwinge und dem Anbaubock einstellbar.

Vorteilhaft ist, dass somit zwei unabhängig einstellbare Aktoren gegeben sind mittels denen die unterschiedliche Querabstände zwischen dem Anbaubock und dem in Fahrtrichtung vordersten Pflugkörper bewirkenden Stellungen von Versatzschwinge und Vorderfurchenschwinge einstellbar sind, wobei die Stellungen kombinierbar sind, sprich sich gegenseitig ergänzen. Die Ausrichtung des Pflugrahmens zum Stabilisator passt sich hierbei den verschiedenen Einstellungen an.

Der erfindungsgemäße Aufsatteldrehpflug ist ferner vorteilhaft dadurch weitergebildet, dass der Pflugrahmen über einen weiteren, hinteren, insbesondere um eine zumindest annährend in Fahrtrichtung liegende Achse drehbar mit dem Stabilisator verbundenen, Wendearm und den vorderen Wendearm um die liegende Wendeachse drehbar an dem Stabilisator angeordnet ist. Der Aufsatteldrehpflug weist somit insgesamt zwei Wendearme auf: Einen vorderen Wendearm, der über die Versatzschwinge und die Vorderfurchenschwinge mit dem vorderen Ende des Pflugrahmens verbunden ist, und einen hinteren Wendearm, der am hinteren freien Ende des Stabilisators direkt mit dem Pflugrahmen verbunden ist.

Um den erfindungsgemäßen Aufsatteldrehpflug flexibel einsetzbar zu schaffen, ist in einer weiteren vorteilhaften Weiterbildung vorgesehen, dass die Pflugkörperreihen mittels eines Arbeitsbreitenaktors in ihrer Arbeitsbreite verstellbar sind. Vorzugsweise sind die einzelnen Pflugkörper schwenkbar am Pflugrahmen angeordnet und über eine Stellstange miteinander gekoppelt, so dass sie mittels des Arbeitsbreitenaktors im Gleichgang verschwenkbar sind.

Zur Schaffung einer funktionssicheren und robusten Kinematik zur Einstellung der Arbeitsbreite, ist der Arbeitsbreitenaktor in einer weiteren vorteilhaften Weiterbildung zwischen dem hinteren Wendearm und dem Pflugrahmen angeordnet. Vorzugsweise ist der Arbeitsbreitenaktor im mittleren Bereich des Pflugrahmens angeordnet, so dass die Hälfte der Pflugkörper in Fahrtrichtung vor der Anbindung des Arbeitsbreitenaktors am Pflugrahmen am Pflugrahmen angeordnet ist. Die andere Hälfte der Pflugkörper ist vorzugsweise in Fahrtrichtung hinter der Anbindung des Arbeitsbreitenaktors am Pflugrahmen am Pflugrahmen angeordnet.

In einer weiteren vorteilhaften Ausführungsform des erfindungsgemäßen Aufsatteldrehpfluges ist vorgesehen, dass der Pflugrahmen mittels des Versatzaktors für den Wendevorgang um eine Einschwenkachse quer zur Wendeachse in eine Wendestellung mit verringerter Querausladung einschwenkbar ist. Insbesondere in der Onland-Arbeitsposition weist der Aufsatteldrehpflug eine große Querausladung auf, so dass es zur Verbesserung der an der Zugmaschine angreifenden Hebelkräfte vorteilhaft ist, die Querausladung vor der Betätigung eines Wendeaktors zu verringern, um das Unfallrisiko zu minimieren. Alternativ ist zur Verkürzung des Wendevorgangs, insbesondere bei einer Arbeitsposition mit geringer Querausladung, wie beispielsweise einer Furchenarbeitsposition, denkbar, dass der Versatzaktor für den Wendevorgang von der Druckmittelversorgung trennbar ist, so dass ein Wendeaktor direkt mit Druckmittel beaufschlagt wird. Alternativ oder zusätzlich kann der Verstellaktor genutzt werden, um den Pflugrahmen zum Erreichen der Wendestellung einzuschwenken, vorzugsweise sind dem Verstellaktor in diesem Fall Anschlagmittel zugeordnet, so dass der Verstellaktor nach vollzogener Wendung in die ursprüngliche Hubstellung wie vor der Wendung zurückverfahren werden kann, um die gleiche Arbeitsposition des Anbaudrehpflugs zu erreichen. Vorzugsweise wird der Versatzaktor zur Verbringung des Pflugrahmens zwischen seiner Arbeitsposition und der Wendestellung zwischen seinen Endlagen verfahren, so dass der Aufsatteldrehpflug nach der Wendung in einfacher Weise in die ursprüngliche Arbeitsposition zurückverfahrbar ist.

In einer weiteren vorteilhaften Ausführungsform des erfindungsgemäßen Aufsatteldrehpfluges ist vorgesehen, dass der Pflugrahmen mittels des Verstellaktors für den Wendevorgang um eine Einschwenkachse quer zur Wendeachse in eine Wendestellung mit verringerter Querausladung einschwenkbar ist. Der Pflugrahmen kann alternativ oder zusätzlich mittels des Versatzaktors für den Wendevorgang einschwenkbar sein.

In einer weiteren besonders vorteilhaften Ausführungsform des erfindungsgemäßen Aufsatteldrehpflugs ist vorgesehen, dass der Versatzaktor und/oder Verstellaktor an die Druckmittelversorgung zumindest eines Wendeaktors angebunden ist derart, dass bei Druckbeaufschlagung des Wendeaktors zunächst der Versatzaktor und/oder Verstellaktor mit Druckmittel beaufschlagt wird, vorzugsweise solange bis eine Endlage erreicht ist, bevor der Wendeaktor mit Druckmittel beaufschlagt wird. Infolge dieser Maßnahme ist eine zweckmäßige Folgeschaltung für den Versatzaktor und/oder Verstellaktor und den Wendeaktor zur Verbringung des Pflugrahmens zwischen seiner Arbeitsposition und der Wendestellung geschaffen, die eine besonders einfache und zuverlässige Bedienung ermöglicht. Besonders vorteilhaft ist hierbei, dass zur Wendung des Pflugrahmens lediglich der Wendeaktor zu betätigen ist, wobei der Pflugrahmen in dieser Ausführungsform vor der Wendung automatisch in seine Wendestellung mit verringerter Querausladung eingeschwenkt wird.

In einer weiteren vorteilhaften Weiterbildung des erfindungsgemäßen Aufsatteldrehpflugs ist dem Versatzaktor und/oder Verstellaktor ein Sperrventil vorgeschaltet. In besonders einfacher Weise lässt der Versatzaktor und/oder Verstellaktor sich somit von jeglicher Druckmittelversorung trennen und somit in seiner Hubstellung halten und/oder nur noch in einer Richtung verfahren. Das Sperrventil ist vorzugsweise dazu eingerichtet, den Versatzaktor und/oder Verstellaktor in zumindest einer Hubrichtung hydraulisch zu verriegeln. Das Sperrventil ist vorzugsweise als 2/2-Wegeventil mit einseitigem Rückschlagventil ausgeführt.

Der erfindungsgemäße Aufsatteldrehpflug ist ferner vorteilhaft dadurch weitergebildet, dass der Aufsatteldrehpflug eine mit dem Sperrventil verbundene Wendesteuereinrichtung umfasst, dass die Wendesteuereinrichtung dazu eingerichtet ist, den Versatzaktor und/oder Verstellaktor bei Erreichen einer Endlage mittels des Sperrventils in seiner Hubposition zu halten und/oder nach Wendung des Pflugrahmens das Sperrventil freizugeben und den Versatzaktor und/oder Verstellaktor so mit Druckmittel zu beaufschlagen. Die Endlage des Versatzaktors kann durch den ausführbaren Hub und/oder in einstellbarer Weise durch Hubbegrenzungsmittel geschaffen sein. In vorteilhafter Weise ist der Versatzaktor und/oder Verstellaktor während der Wendung somit in seiner Hublage gehalten. Die Wendesteuereinrichtung kann eine mit einem Betätigungselement des Sperrventils zusammenwirkende Kurvenscheibe umfassen. Die Wendesteuereinrichtung kann eine mechanische Koppelung umfassen, die an das Sperrventil angebunden ist und das Erreichen der Wendestellung und/oder die vollendete Wendung in eine Stellbewegung des Sperrventils umsetzt.

In einer weiteren vorteilhaften Ausführungsform des erfindungsgemäßen Aufsatteldrehpfluges ist vorgesehen, dass der, insbesondere vordere, Wendearm, die Versatzschwinge und die Vorderfurchenschwinge ein Anlenkgetriebe bilden, welches in unterschiedliche Querabstände zwischen dem Anbaubock und dem in Fahrtrichtung vordersten Pflugkörper bewirkende Stellungen verbringbar ist, dass das Anlenkgetriebe mittels des Verstellaktors und des Versatzaktors unabhängig voneinander, stufenlos zwischen verschiedenen Endlagenstellungen verbringbar ist. Das Anlenkgetriebe lässt sich durch einen der Aktoren verstellen während der jeweils andere Aktor in seiner Hublage gehalten werden kann, wodurch sich durch die Kombination der minimalen und maximalen Hubstellung des Versatzaktors und Verstellaktors zumindest vier verschiedene Endlagenstellungen für das Anlenkgetriebe ergeben. Der Versatzaktor ist vorzugsweise derart angeordnet, dass er das Intervall der über den Verstellaktor mittels des Anlenkgetriebes einstellbaren Querabstände nach oben und unten erweitert.

Die Vorderfurchenbreite bzw. der Abstand des in Fahrtrichtung vordersten Pflugkörpers zur Furchenkante, also die Arbeitsbreite des vordersten Pflugkörpers, kann mittels des Verstellaktors einstellbar sein. Der Verstellaktor kann dazu eingerichtet sein, den Aufsatteldrehpflug zwischen seiner Furchenarbeitsposition und seiner Onland-Arbeitsposition zu verbringen.

Um eine besonders zweckmäßige Dimensionierung von Verstellaktor und Versatzaktor zu schaffen, ist vorgesehen, dass der ausführbare Hub des Verstellaktors doppelt, vorzugsweise dreifach, besonders vorzugsweise vierfach, so groß ist wie der ausführbare Hub des Versatzaktors. Der Verstellaktor ist infolge dieser Weiterbildung besonders dazu eingerichtet, den Aufsatteldrehpflug zwischen seiner Furchenarbeitsposition und seiner Onland-Arbeitsposition zu verbringen. Der Versatzaktor ist infolge dieser Weiterbildung besonders dazu eingerichtet, die Furchenarbeitsposition und seiner Onland-Arbeitsposition mit weiterem Versatz zu ergänzen.

Der erfindungsgemäße Aufsatteldrehpflug ist ferner vorteilhaft dadurch weitergebildet, dass der Querabstand zwischen dem Anbaubock und dem in Fahrtrichtung vordersten Pflugkörper mittels unterschiedlicher Stellungen der Versatzschwinge und Vorderfurchenschwinge, insbesondere des Anlenkgetriebes, zumindest auf 1,5 Meter, vorzugsweise maximal annährend 2 Meter, einstellbar ist. Infolge dieser Weiterbildung ist der Aufsatteldrehpflug somit in der Onland-Arbeitsposition mit Zugmaschinen mit einer Außenbreite von bis zu 4 Metern einsetzbar. Infolge von Wetterextremen empfiehlt sich für einige Arbeitseinsätze die Verwendung von Zwillingsbereifung an der Zugmaschine, wobei der Aufsatteldrehpflug infolge dieser Weiterbildung auch für derartige Arbeitseinsätze geeignet ist. Alternativ oder zusätzlich ist der Querabstand, insbesondere in der Furchenarbeitsposition, zwischen dem Anbaubock und dem in Fahrtrichtung vordersten Pflugkörper mittels unterschiedlicher Stellungen der Versatzschwinge und Vorderfurchenschwinge, insbesondere des Anlenkgetriebes, zumindest auf 0,6 Meter einstellbar ist.

Um die Kinematik für den Wendevorgang in einfacher Weise zu verbessern, sind in einer weiteren vorteilhaften Weiterbildung dem Versatzaktor, insbesondere in Onland-Arbeitsposition, Hubbegrenzungsmittel, die den Einstellbereich vorzugsweise auf die Hälfte des ausführbaren Hubs begrenzen, zugeordnet. Die Hubbegrenzungsmittel können als Clips ausgeführt sein, welche auf die Kolbenstange des Versatzaktors aufsteckbar sind, so dass sie einen variabel einstellbaren Anschlag für eine verkürzte Endlage des Versatzaktors bilden.

In einer weiteren vorteilhaften Weiterbildung des erfindungsgemäßen Aufsatteldrehpfluges ist vorgesehen, dass er Stabilisator eine konstante Länge aufweist. Der Stabilisator ist somit besonders robust ausgeführt. Der Stabilisator kann alternativ oder zusätzlich knickbar sein, damit der Pflugrahmen den Stellungen der Versatzschwinge und Vorderfurchenschwinge folgen kann.

Der erfindungsgemäße Aufsatteldrehpflug ist ferner vorteilhaft dadurch weitergebildet, dass der Verstellaktor als Memoryzylinder ausgeführt ist und einen Memorykolben aufweist, der eine Druckmittelkammer des Verstellaktors in zwei separate Druckmittelkammern unterteilt und insbesondere dazu eingerichtet ist, einen internen Anschlag für einen mit einer Kolbenstange des Verstellaktors verbundenen Kolben zu bilden. Somit ist der Aufsatteldrehpflug mittels des Memoryzylinders dazu eingerichtet, eine Hubstellung des Verstellaktors "einzuspeichern" und diese nach dem Einfahren beim Ausfahren wieder anzufahren. Vorzugsweise ist der Memoryzylinder in der gewünschten Hubstellung gegen den Kolben des Verstellaktors verfahrbar, wobei zumindest die dem Kolben abgewandte Druckmittelkammer der separaten Druckmittelkammern anschließend, vorzugsweise hydraulisch, gesperrt wird, so dass der Memoryzylinder in seiner Hubstellung gegenüber dem Kolben gehalten wird. Der Kolben des Verstellaktors ist durch Druckmittelbeaufschlagung der dem Kolben zugewandten Druckmittelkammer der zwei separaten Druckmittelkammern einfahrbar. Der Kolben des Verstellaktors ist durch Druckmittelbeaufschlagung der Kolbenseite ausfahrbar, wobei der Memoryzylinder einen internen Anschlag für die Ausfahrbewegung des Kolbens bildet, da er in seiner Hubstellung gehalten werden kann. In vorteilhafter Weise kann diese Ausführungsform mit der Weiterbildung zur Verbringung des Pflugrahmens in eine Wendestellung mittels des Verstellaktors kombiniert werden, indem der Memoryzylinder dazu dienen kann die Wiedereinnahme der ursprünglichen Arbeitsposition mittels des Verstellaktors zu erleichtern, indem er einen internen Anschlag für den Kolben des Verstellaktors in der Arbeitsposition bildet.

Um den erfindungsgemäßen Aufsatteldrehpflug ferner vorteilhaft weiterzubilden, ist dem Verstellaktor ein, vorzugsweise hydraulisches, Dämpfungselement zugeordnet ist, wobei der Verstellaktor, vorzugsweise mittels eines Sperrhahns, insbesondere in Transportstellung des Aufsatteldrehpfluges, federnd gegen das Dämpfungselement in seiner Hubstellung haltbar ist. In der halb gedrehten Transportstellung des Aufsatteldrehpfluges, so dass die Pflugkörperreihen nach oben weisen, kann der Pflugrahmen sich auf dem Verstellaktor abstützen, wobei diese Abstützung infolge dieser Weiterbildung in vorteilhafter Weise gedämpft ist.

Über ein Stützrad zur Transportfahrt in den Aufsatteldrehpflug eingeleitete Stöße durch Bodenunebenheiten oder unwegsames Gelände werden infolge dieser Maßnahme zumindest teilweise abgefedert.

Weitere Einzelheiten der Erfindung sind der Beispielsbeschreibung und den Zeichnungen zu entnehmen. Die Zeichnungen zeigen
- Fig.1: einen erfindungsgemäßen Aufsatteldrehpflug in Onland-Arbeitsposition in schematischer Draufsicht,
- Fig.2: den Aufsatteldrehpflug gemäß Fig.1 in Detaildraufsicht,
- Fig.3: den Aufsatteldrehpflug ähnlich Fig.1,2 in einer zweiten Onland-Arbeitsposition in Detaildraufsicht, und
- Fig.4: den Aufsatteldrehpflug in Furchenarbeitsposition in Detaildraufsicht.

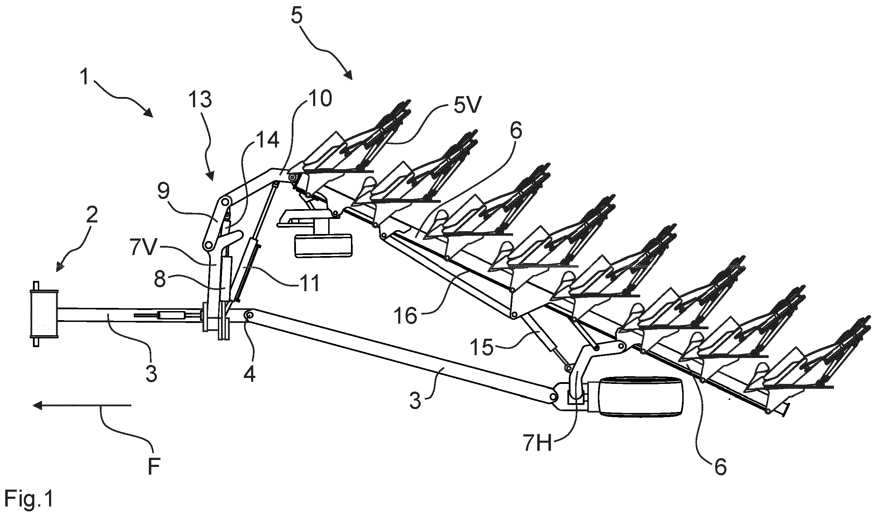

Ein erfindungsgemäßer Aufsatteldrehpflug 1 mit einem Anbaubock 2 zum Anbau an eine nicht dargestellte Zugmaschine ist in Fig. 1 zu sehen. Von dem Anbaubock 2 erstreckt sich ein zweiteiliger Stabilisator 3 in Fahrtrichtung F nach hinten. Die beiden Teile des Stabilisators 3 sind mit Hilfe eines Gelenks 4 mit zumindest annährend vertikaler Gelenkachse drehbar verbunden, so dass der Stabilisator 3 quer zur Fahrtrichtung F knickbar ist. Der Stabilisator 3 weist eine konstante Länge auf und ist somit nicht teleskopierbar oder anderweitig längenveränderbar ausführt.

Ein zwei gegenüberliegende Pflugkörperreihen 5 tragender Pflugrahmen 6 ist über einen vorderen Wendearm 7V und einen hinteren Wendearm 7H um eine liegende Wendeachse drehbar am Stabilisator 3 angeordnet. Der hintere Wendearm 7H ist um eine zumindest annährend in Fahrtrichtung F liegende Achse drehbar mit dem Stabilisator verbunden. Der Aufsatteldrehpflug 1 umfasst einen Wendeaktor 8, um den Pflugrahmen 6 von der in Fig.1 dargestellten rechten Arbeitsseite um die liegende Wendeachse auf die gegenüberliegende Arbeitsseite zu wenden.

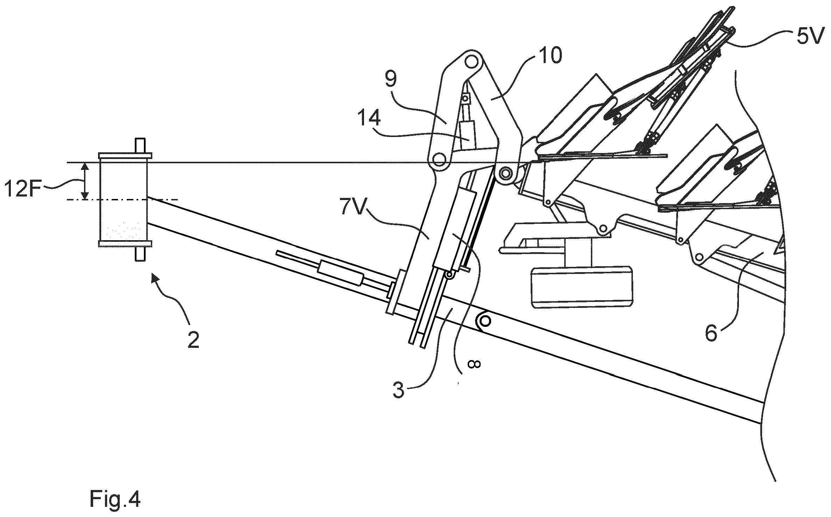

Um den Aufsatteldrehpflug 1 wahlweise in der gezeigten Onland-Arbeitsposition oder einer Furchenarbeitsposition, gezeigt in Fig.4, verwenden zu können, sind zwischen dem Pflugrahmen 6 und dem vorderen Wendearm 7V eine drehbar mit dem Wendearm 7V verbundene Versatzschwinge 9 und eine einerseits gelenkig mit der Versatzschwinge 9 und andererseits drehbar mit dem Pflugrahmen 6 verbundene Vorderfurchenschwinge 10 angeordnet. Die Versatzschwinge 9 und die Vorderfurchenschwinge 10 sind durch einen Verstellaktor 11 in unterschiedliche Querabstände 12, 120, 12F zwischen dem Anbaubock 2 und dem in Fahrtrichtung F vordersten Pflugkörper 5V bewirkende Stellungen verbringbar. Der Aufsatteldrehpflug 1 lässt sich mit Hilfe des Verstellaktors 11 über die Versatzschwinge 9 und die Vorderfurchenschwinge 10, welche auch gemeinsam mit dem Wendearm 7V als Anlenkgetriebe 13 bezeichnet werden können, zwischen der Onland-Arbeitsposition und der Furchenarbeitsposition verbringen.

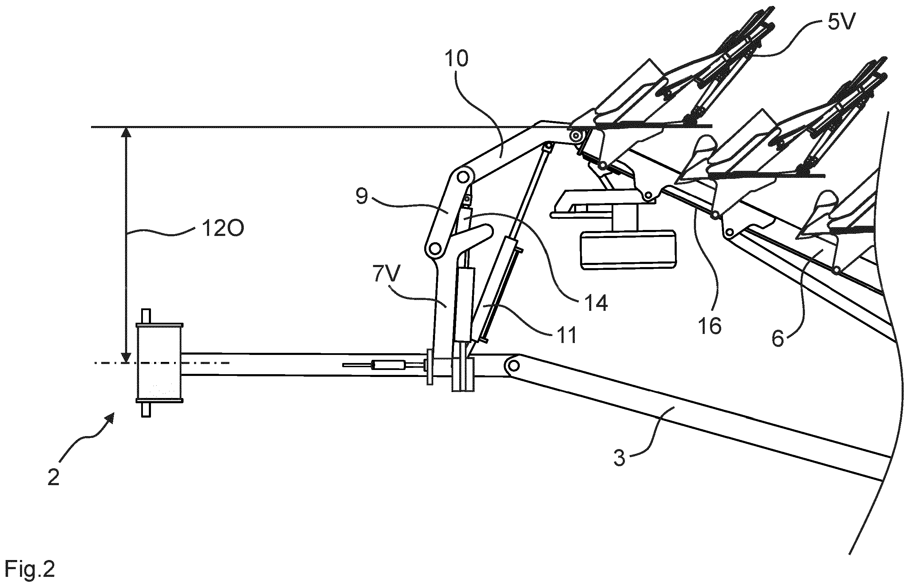

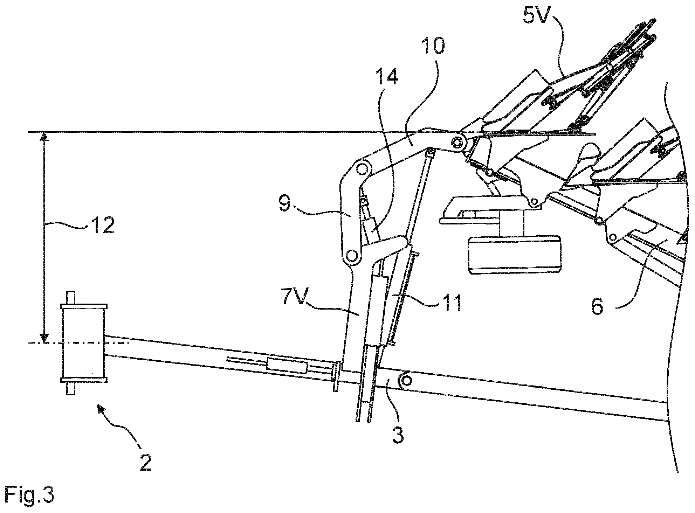

Wie in Fig.1 zu sehen, umfasst der Aufsatteldrehpflug 1 einen Versatzaktor 14 mittels dem die Versatzschwinge 9 und die Vorderfurchenschwinge 10 unabhängig von der Hubstellung des Verstellaktors 11 in unterschiedliche Querabstände 12, 120, 12F zwischen dem Anbaubock 2 und dem in Fahrtrichtung F vordersten Pflugkörper 5V bewirkende Stellungen verbringbar sind. Der Versatzaktor 14 ist zwischen dem drehbar mit der Versatzschwinge 9 verbundenen Ende des Wendearms 7V und der Versatzschwinge 9, nämlich dem gelenkig mit der Vorderfurchenschwinge 10 verbundenen Ende der Versatzschwinge 9, angeordnet. Wie durch die Zusammenschau der Fig.2 und 3 deutlich wird, wirkt der Versatzaktor 14 somit primär auf die Stellung der Versatzschwinge 9 zum Wendearm 7V ein, welche wiederum über die gelenkige Verbindung zwischen Versatzschwinge 9 und Vorderfurchenschwinge 10 sekundär die Stellung der Vorderfurchenschwinge 10 zum Pflugrahmen 6 bewirkt.

In Fig.2 sind die Versatzschwinge 9 und die Vorderfurchenschwinge 10 in der den maximalen Querabstand 120 bewirkenden Stellung gezeigt. Der Querabstand 120 zwischen dem Anbaubock 2 und dem in Fahrtrichtung F vordersten Pflugkörper 5V ist hier auf zumindest annähernd 2 Meter eingestellt. Der Verstellaktor 11 ist in dieser Stellung maximal ausgefahren und der Versatzaktor 14 eingefahren. Der Verstellaktor 11 schiebt den Punkt an dem die Vorderfurchenschwinge 10 drehbar mit dem Pflugrahmen 6 verbunden ist über seinen Hubweg nach außen. Zudem drückt der Versatzaktor 14 die Vorderfurchenschwinge 10 noch weiter nach außen, indem er die Versatzschwinge 9 heranzieht, wie aus der Zusammenschau von Fig.2 und 3 deutlich wird. In Fig.3 sind die Versatzschwinge 9 und die Vorderfurchenschwinge 10 in einer einen verringerten Querabstand 12 bewirkenden Stellung gezeigt, welche durch Ausfahren des Versatzaktors 14 bei maximalem Hubweg des Verstellaktors 11 einstellbar ist.

Der Verstellaktor 11 ist zwischen dem um die in Fahrtrichtung F liegende Achse drehbar mit dem Stabilisator 3 verbundenen Ende des Wendearms 7V und dem drehbar mit dem Pflugrahmen 6 verbundenen Ende der Vorderfurchenschwinge 10 angeordnet. Der Verstellaktor 11 wirkt somit primär auf die Stellung der Vorderfurchenschwinge 10 zur Versatzschwinge 9 ein, welche wiederum über die gelenkige Verbindung zwischen Vorderfurchenschwinge 10 und Versatzschwinge 9 sekundär die Stellung der Versatzschwinge 9 zum Wendearm 7V bewirkt. Die Vorderfurchenbreite bzw. der Abstand des Pflugkörpers 5V zur Furche lässt sich folglich primär durch die Hubstellung des Verstellaktors 11 einstellen und bei Bedarf mit Hilfe des Versatzaktors 14 zusätzlich vergrößern und/oder verkleinern.

In Fig.4 sind die Versatzschwinge 9 und die Vorderfurchenschwinge 10 in der den minimalen Querabstand 12F bewirkenden Stellung gezeigt, wobei der Aufsatteldrehpflug 1 sich in einer Furchenarbeitsposition befindet. Der Querabstand 12F zwischen dem Anbaubock 2 und dem in Fahrtrichtung F vordersten Pflugkörper 5V ist hier auf zumindest annährend 0,6 Meter eingestellt. Der Verstellaktor 11 ist in dieser Stellung in seine minimale Hubstellung eingefahren und der Versatzaktor 14 ist ausgefahren. Diese Furchenarbeitsposition entspricht vorzugsweise der Transportposition des Aufsatteldrehpfluges 1.

Der vordere Wendearm 7V, die Versatzschwinge 9 und die Vorderfurcheschwinge 10 bilden somit ein Anlenkgetriebe 13, welches in die unterschiedlichen Querabstände 12, 120, 12F zwischen dem Anbaubock 2 und dem in Fahrtrichtung F vordersten Pflugkörper 5V bewirkende Stellungen verbringbar ist, wobei das Anlenkgetriebe 13 mittels des Verstellaktors 11 und des Versatzaktors 14 unabhängig voneinander, stufenlos zwischen den verschiedenen, in den Fig.2, 3 und 4 dargestellten Endlagenstellungen verbringbar ist. Der ausführbare Hub des Verstellaktors 11 beträgt hierbei zumindest das Vierfache des ausführbaren Hubs des Versatzaktors 14.

Die Pflugkörperreihen 5 sind überdies mittels eines Arbeitsbreitenaktors 15, der zwischen dem hinteren Wendearm 7H und dem Pflugrahmen 6 angeordnet ist, in ihrer Arbeitsbreite verstellbar. Die einzelnen Pflugkörper sind schwenkbar am Pflugrahmen 6 aufgenommen und durch eine Koppelstange 16 miteinander gekoppelt, so dass sie mittels des Arbeitsbreitenaktors 15 in einstellbarer Weise im Gleichgang verschwenkbar sind.

Da der Aufsatteldrehpflug 1 insbesondere in der in Fig.2 gezeigten Onland-Arbeitsposition quer zur Fahrtrichtung F weit auslädt, ist der Pflugrahmen 6 mittels des Versatzaktors 14 für den Wendevorgang um eine Einschwenkachse quer zur Wendeachse in eine Wendestellung mit verringerter Querausladung einschwenkbar, wie in Fig.3 gezeigt. Der Versatzaktor 14 ist hierzu derart an die Druckmittelversorgung des Wendeaktors 8 angebunden, dass bei Druckbeaufschlagung des Wendeaktors 8 zunächst der Versatzaktor 14 mit Druckmittel beaufschlagt wird bis er seine Endlage erreicht, bevor der Wendeaktor 8 mit Druckmittel beaufschlagt wird, um den Pflugrahmen 6 mit Hilfe der Wendearme 7V, 7H auf seine gegenüberliegende Arbeitsseite zu wenden. Es ist somit eine Folgeschaltung von Versatzaktor 14 und Wendeaktor 8 geschaffen, die vor jeder Wendung den Pflugrahmen 6 zunächst einschwenkt.

Dem Versatzaktor 14 ist ein nicht dargestelltes Sperrventil vorgeschaltet durch dessen Betätigung der Versatzaktor 14 in seiner Hubstellung gehalten ist. Alternativ oder zusätzlich ist dem Verstellaktor 11 ein Sperrventil vorgeschaltet. Um den Pflugrahmen 6 nach vollzogener Wendung wieder in die ursprüngliche Arbeitsposition auszuschwenken, ist vorgesehen, dass der Aufsatteldrehpflug 1 eine mit dem Sperrventil verbundene Wendesteuereinrichtung umfasst. Die Wendesteuereinrichtung ist dazu eingerichtet, den Versatzaktor 14 bei Erreichen einer Endlage mittels des Sperrventils in seiner Hubposition zu halten und nach der Wendung des Pflugrahmens 6 das Sperrventil freizugeben und den Versatzaktor 14 so mit Druckmittel zu beaufschlagen. Alternativ oder zusätzlich kann die Wendesteuereinrichtung dazu eingerichtet sein, den Verstelleaktor 11 in vorstehender Weise in seiner Hubstellung zu halten bzw. mit Druckmittel zu beaufschlagen. Dem Versatzaktor 14 können hierbei Hubbegrenzungsmittel in Form von auf die Kolbenstange aufgesteckten Clips zugeordnet sein, um den Einstellbereich beispielsweise auf die Hälfte des ausführbaren Hubs zu begrenzen. Die Endlage wird in diesem Fall schon nach dem halben Hub des Versatzaktors 14 erreicht, woraufhin die Wendestellung erreicht ist.

Der Wendevorgang läuft somit nach folgendem Bewegungsmuster ab: Bei Einleitung des Wendevorgangs, beispielsweise aus der in Fig.2 dargestellten Onland-Arbeitsposition, durch Beaufschlagung des Wendeaktors 8 mit Druckmittel wird zunächst der Pflugrahmen 6 mittels des Versatzaktors 14 in eine Wendestellung eingeschwenkt. Alternativ oder zusätzlich ist denkbar, dass der Pflugrahmen 6 mittels des Verstellaktors 11 in die Wendestellung eingeschwenkt wird. Durch die Anbindung des Versatzaktors 14 und/oder des Verstellaktors 11 an die Druckmittelversorgung des Wendeaktors 8 wird der Wendeaktor 8 erst bei Erreichen der Wendestellung, gezeigt in Fig.3, mit Druckmittel beaufschlagt, so dass der Pflugrahmen 6 um 180 Grad gewendet wird. Der Versatzaktor 14 und/oder Verstellaktor 11 wird hierbei mittels des von der Wendesteuereinrichtung betätigten Sperrventils in seiner Hubstellung gehalten. Nach der Wendung wird das Sperrventil von der Wendesteuereinrichtung freigegeben, so dass Versatzaktor 14 und/oder Verstellaktor 11 wieder mit Druckmittel beaufschlagt wird und der Pflugrahmen 6 in seine ursprüngliche Arbeitsposition gemäß Fig.2 ausgeschwenkt wird.

In einer nicht dargestellten Ausführungsform ist der Verstellaktor 11 als Memoryzylinder ausgeführt und weist einen Memorykolben auf, der eine Druckmittelkammer, nämlich die Ringkammer, des Verstellaktors 11 in zwei separate Druckmittelkammern unterteilt. Der Memorykolben kann dazu vorgesehen sein, einen internen Anschlag für einen mit einer Kolbenstange des Verstellaktors 11 verbundenen Kolben zu bilden. Besonders vorteilhaft ist dies, wenn der Verstellaktor 11 zur Einnahme einer Wendestellung des Pflugrahmens 6 mit verringerter Querausladung bei der Wendung eingefahren wird, da die ursprüngliche Arbeitsposition beim Wiederausfahren nach der Wendung zuverlässig wieder anfahrbar ist, indem der Kolben gegen den durch den Memorykolben gebildeten internen Anschlag gefahren wird. Der Memorykolben kann hierzu mittels geeigneter Mittel entsprechend der gewünschten Arbeitsposition gegenüber dem Kolben des Verstellaktors 11 verfahren und in seiner Hubstellung gehalten werden.

Ferner kann dem Verstellaktor 11 in einer weiteren nicht dargestellten Ausführungsform ein hydraulisches Dämpfungselement in Form eines Hydraulikspeichers zugeordnet sein. Der Verstellaktor 11 kann in Transportstellung federnd gegen den Hydraulikspeicher in seiner Hubstellung gehalten werden, so dass Stöße bei der Transportfahrt abgefedert werden können. Dem Verstellaktor 11 kann ein Sperrhahn zugeordnet sein, um den Verstellaktor 11 in seiner Hubstellung federnd gegen den Hydraulikspeicher zu halten.

### Bezugszeichenliste

- 1: Aufsatteldrehpflug
- 2: Anbaubock
- 3: Stabilisator
- F: Fahrtrichtung
- 4: Gelenk
- 5: Pflugkörperreihen
- 5V: (vorderster) Pflugkörper
- 6: Pflugrahmen
- 7V, 7H: Wendearm
- 8: Wendeaktor
- 9: Versatzschwinge
- 10: Vorderfurchenschwinge
- 11: Verstellaktor
- 12, 120, 12F: Querabstand
- 13: Anlenkgetriebe
- 14: Versatzaktor
- 15: Arbeitsbreitenaktor
- 16: Koppelstange

## Patentansprüche

1. Aufsatteldrehpflug (1) mit einem Anbaubock (2) zum Anbau an eine Zugmaschine, einem mit dem Anbaubock (2) verbundenen Stabilisator (3) an dem über zumindest einen, insbesondere vorderen, Wendearm (7V) ein zwei Pflugkörperreihen (5) tragender Pflugrahmen (6) um eine liegende Wendeachse drehbar angeordnet ist, wobei zwischen dem Pflugrahmen (6) und dem Wendearm (7V) eine drehbar mit dem Wendearm (7V) verbundene Versatzschwinge (9) und eine einerseits gelenkig mit der Versatzschwinge (9) und andererseits drehbar mit dem Pflugrahmen (6) verbundene Vorderfurchenschwinge (10) angeordnet sind, die durch einen Verstellaktor (11) in unterschiedliche Querabstände (12, 120, 12F) zwischen dem Anbaubock (2) und dem in Fahrtrichtung (F) vordersten Pflugkörper (5V) bewirkende Stellungen verbringbar sind, so dass der Aufsatteldrehpflug (1) wahlweise zur Einnahme einer Furchenarbeitsposition und einer Onland-Arbeitsposition eingerichtet ist, **dadurch gekennzeichnet, dass** der Aufsatteldrehpflug (1) einen Versatzaktor (14) umfasst mittels dem die Versatzschwinge (9) und die Vorderfurchenschwinge (10) unabhängig von der Hubstellung des Verstellaktors (11) in unterschiedliche Querabstände (12, 120, 12F) zwischen dem Anbaubock (2) und dem in Fahrtrichtung (F) vordersten Pflugkörper (5V) bewirkende Stellungen verbringbar sind.

2. Aufsatteldrehpflug (1) nach Anspruch 1, **dadurch gekennzeichnet, dass** der Versatzaktor (14) zwischen dem Wendearm (7V), insbesondere dem drehbar mit der Versatzschwinge (9) verbundenen Ende des Wendearms (7V), und der Versatzschwinge (9), insbesondere dem gelenkig mit der Vorderfurchenschwinge (10) verbundenen Ende der Versatzschwinge (9), angeordnet ist.

3. Aufsatteldrehpflug (1) nach zumindest einem der vorstehenden Ansprüche,
**dadurch gekennzeichnet, dass** der Verstellaktor (11) zwischen dem Wendearm (7V), insbesondere einem um eine in Fahrtrichtung (F) liegende Achse drehbar mit dem Stabilisator (3) verbundenen Ende des Wendearms (7V), und der Vorderfurchenschwinge (10), insbesondere dem drehbar mit dem Pflugrahmen (6) verbundenen Ende der Vorderfurchenschwinge (10), angeordnet ist.

4. Aufsatteldrehpflug (1) nach zumindest einem der vorstehenden Ansprüche,
**dadurch gekennzeichnet, dass** der Pflugrahmen (6) über einen weiteren, hinteren, insbesondere um eine zumindest annährend in Fahrtrichtung (F) liegende Achse drehbar mit dem Stabilisator (3) verbundenen, Wendearm (7H) und den vorderen Wendearm (7V) um die liegende Wendeachse drehbar an dem Stabilisator (3) angeordnet ist.

5. Aufsatteldrehpflug (1) nach zumindest einem der vorstehenden Ansprüche, **dadurch gekennzeichnet, dass** die Pflugkörperreihen (5) mittels eines Arbeitsbreitenaktors (15) in ihrer Arbeitsbreite verstellbar sind.

6. Aufsatteldrehpflug (1) nach Anspruch 4 und 5, **dadurch gekennzeichnet, dass** der Arbeitsbreitenaktor (15) zwischen dem hinteren Wendearm (7H) und dem Pflugrahmen (6) angeordnet ist.

7. Aufsatteldrehpflug (1) nach zumindest einem der vorstehenden Ansprüche,
**dadurch gekennzeichnet, dass** der Pflugrahmen (6) mittels des Versatzaktors (14) für den Wendevorgang um eine Einschwenkachse quer zur Wendeachse in eine Wendestellung mit verringerter Querausladung einschwenkbar ist.

8. Aufsatteldrehpflug (1) nach zumindest einem der vorstehenden Ansprüche,
**dadurch gekennzeichnet, dass** der Pflugrahmen (6) mittels des Verstellaktors (11) für den Wendevorgang um eine Einschwenkachse quer zur Wendeachse in eine Wendestellung mit verringerter Querausladung einschwenkbar ist.

9. Aufsatteldrehpflug (1) nach Anspruch 7 oder 8, **dadurch gekennzeichnet, dass** der Versatzaktor (14) und/oder der Verstellaktor (11) an die Druckmittelversorgung zumindest eines Wendeaktors (8) angebunden ist derart, dass bei Druckbeaufschlagung des Wendeaktors (8) zunächst der Versatzaktor (14) und/oder Verstellaktor (11) mit Druckmittel beaufschlagt wird, vorzugsweise solange bis eine Endlage erreicht ist, bevor der Wendeaktor (8) mit Druckmittel beaufschlagt wird.

10. Aufsatteldrehpflug (1) nach zumindest einem der vorstehenden Ansprüche,
**dadurch gekennzeichnet, dass** dem Versatzaktor (14) und/oder Verstellaktor (11) ein Sperrventil vorgeschaltet ist.

11. Aufsatteldrehpflug (1) nach Anspruch 7, 8 oder 9 und 10, **dadurch gekennzeichnet, dass** der Aufsatteldrehpflug (1) eine mit dem Sperrventil verbundene Wendesteuereinrichtung umfasst, dass die Wendesteuereinrichtung dazu eingerichtet ist, den Versatzaktor (14) und/oder Verstellaktor (11) bei Erreichen einer Endlage mittels des Sperrventils in seiner Hubposition zu halten und/oder nach Wendung des Pflugrahmens (6) das Sperrventil freizugeben und den Versatzaktor (14) und/oder Verstellaktor (11) so mit Druckmittel zu beaufschlagen.

12. Aufsatteldrehpflug (1) nach zumindest einem der vorstehenden Ansprüche,
**dadurch gekennzeichnet, dass** der, insbesondere vordere, Wendearm (7V), die Versatzschwinge (9) und die Vorderfurchenschwinge (10) ein Anlenkgetriebe (13) bilden, welches in unterschiedliche Querabstände (12, 120, 12F) zwischen dem Anbaubock (2) und dem in Fahrtrichtung (F) vordersten Pflugkörper (5V) bewirkende Stellungen verbringbar ist, dass das Anlenkgetriebe (13) mittels des Verstellaktors (11) und des Versatzaktors (14) unabhängig voneinander, stufenlos zwischen verschiedenen Endlagenstellungen verbringbar ist.

13. Aufsatteldrehpflug (1) nach Anspruch 7, **dadurch gekennzeichnet, dass** dem Versatzaktor (14), insbesondere in Onland-Arbeitsposition, Hubbegrenzungsmittel, die den Einstellbereich vorzugsweise auf die Hälfte des ausführbaren Hubs begrenzen, zugeordnet sind.

14. Aufsatteldrehpflug (1) nach zumindest einem der vorstehenden Ansprüche, **dadurch gekennzeichnet, dass** der Verstellaktor (11) als Memoryzylinder ausgeführt ist und einen Memorykolben aufweist, der eine Druckmittelkammer des Verstellaktors (11) in zwei separate Druckmittelkammern unterteilt und insbesondere dazu eingerichtet ist, einen internen Anschlag für einen mit einer Kolbenstange des Verstellaktors (11) verbundenen Kolben zu bilden,

15. Aufsatteldrehpflug (1) nach zumindest einem der vorstehenden Ansprüche, **dadurch gekennzeichnet, dass** dem Verstellaktor (11) ein, vorzugsweise hydraulisches, Dämpfungselement zugeordnet ist, dass der Verstellaktor (11), vorzugsweise mittels eines Sperrhahns, insbesondere in Transportstellung des Aufsatteldrehpfluges (1), federnd gegen das Dämpfungselement in seiner Hubstellung haltbar ist.

## Claims

1. Semi-mounted reversible plow (1) comprising a headstock (2) for attachment to a tractor, a stabilizer which is (3) connected to the headstock (2) and on which a plow frame (6) carrying two rows of plow bodies (5) is arranged so as to be rotatable about a horizontal turning axis via at least one, in particular front, turning arm (7V), an offset rocker (9), rotatably connected to the turning arm (7V), and a front furrow rocker (10), connected both in an articulated manner to the offset rocker (9) and rotatably to the plow frame (6), being arranged between the plow frame (6) and the turning arm (7V), which offset rocker and front furrow rocker can be brought into positions which bring about different transverse distances (12, 120, 12F) between the headstock (2) and the plow body (5V) which is frontmost in the direction of travel (F) by an adjustment actuator (11), and so the semi-mounted reversible plow (1) is designed to selectively assume a furrow working position and an on-land working position, **characterized in that** the semi-mounted reversible plow (1) comprises an offset actuator (14) by means of which the offset rocker (9) and the front furrow rocker (10) can be brought into positions which bring about different transverse distances (12, 120, 12F) between the headstock (2) and the plow body (5V) which is frontmost in the direction of travel (F), regardless of the stroke position of the adjustment actuator (11).

2. Semi-mounted reversible plow (1) according to claim 1,
**characterized in that** the offset actuator (14) is arranged between the turning arm (7V), in particular the end of the turning arm (7V) rotatably connected to the offset rocker (9), and the offset rocker (9), in particular the end of the offset rocker (9) articulatedly connected to the front furrow rocker (10).

3. Semi-mounted reversible plow (1) according to at least one of the preceding claims, **characterized in that** the adjustment actuator (11) is arranged between the turning arm (7V), in particular an end of the turning arm (7V) connected to the stabilizer (3) so as to be rotatable about an axis which is horizontal in the direction of travel (F), and the front furrow rocker (10), in particular the end of the front furrow rocker (10) rotatably connected to the plow frame (6).

4. Semi-mounted reversible plow (1) according to at least one of the preceding claims, **characterized in that** the plow frame (6) is arranged on the stabilizer (3) via a further, rear turning arm (7H), which is connected to the stabilizer (3) in particular so as to be rotatable about an axis which is at least approximately horizontal in the direction of travel (F), and the front turning arm (7V) so as to be rotatable about the horizontal turning axis.

5. Semi-mounted reversible plow (1) according to at least one of the preceding claims, **characterized in that** the working width of the plow body rows (5) is adjustable by means of a working width actuator (15).

6. Semi-mounted reversible plow (1) according to claim 4 and 5,
**characterized in that** the working width actuator (15) is arranged between the rear turning arm (7H) and the plow frame (6).

7. Semi-mounted reversible plow (1) according to at least one of the preceding claims, **characterized in that**, for the turning process, the plow frame (6) can be pivoted about a pivoting axis transverse to the turning axis by means of the offset actuator (14) into a turning position with reduced transverse overhang.

8. Semi-mounted reversible plow (1) according to at least one of the preceding claims, **characterized in that,** for the turning process, the plow frame (6) can be pivoted about a pivoting axis transverse to the turning axis by means of the adjustment actuator (11) into a turning position with reduced transverse overhang.

9. Semi-mounted reversible plow (1) according to claim 7 or 8,
**characterized in that** the offset actuator (14) and/or the adjustment actuator (11) is connected to the pressure medium supply of at least one turning actuator (8) such that, when pressure is applied to the turning actuator (8), firstly the offset actuator (14) and/or adjustment actuator (11) is pressurized with pressure medium, preferably until an end position is reached, before the turning actuator (8) is pressurized with pressure medium.

10. Semi-mounted reversible plow (1) according to at least one of the preceding claims, **characterized in that** a shut-off valve is connected upstream of the offset actuator (14) and/or adjustment actuator (11).

11. Semi-mounted reversible plow (1) according to claim 7, 8 or 9 and 10,
**characterized in that** the semi-mounted reversible plow (1) comprises a turning control device connected to the shut-off valve, **in that** the turning control device is designed to hold the offset actuator (14) and/or adjustment actuator (11) in its stroke position by means of the check valve when an end position is reached and/or to release the check valve after the plow frame (6) has been turned and thus to pressurize the offset actuator (14) and/or adjustment actuator (11) with pressure medium.

12. Semi-mounted reversible plow (1) according to at least one of the preceding claims, **characterized in that** the, in particular front, turning arm (7V), the offset rocker (9), and the front furrow rocker (10) form a linkage mechanism (13) which can be brought into positions which bring about different transverse distances (12, 120, 12F) between the headstock (2) and the plow body (5V) which is foremost in the direction of travel (F), **in that** the linkage mechanism (13) can be independently moved continuously between different end positions by means of the adjustment actuator (11) and the offset actuator (14).

13. Semi-mounted reversible plow (1) according to claim 7,
**characterized in that** stroke limiting means are assigned to the offset actuator (14), in particular in the on-land working position, which limit the adjustment range preferably to half of the executable stroke.

14. Semi-mounted reversible plow (1) according to at least one of the preceding claims, **characterized in that** the adjustment actuator (11) is in the form of a memory cylinder and has a memory piston which divides a pressure medium chamber of the adjustment actuator (11) into two separate pressure medium chambers and is in particular designed to form an internal stop for a piston connected to a piston rod of the adjustment actuator (11).

15. Semi-mounted reversible plow (1) according to at least one of the preceding claims, **characterized in that** a preferably hydraulic damping element is assigned to the adjustment actuator (11), **in that,** in particular in the transport position of the semi-mounted reversible plough (1), the adjustment actuator (11) is resiliently held against the damping element in its stroke position, preferably by means of a stop valve.

## Revendications

1. Charrue réversible semi-portée (1) comportant un chevalet de montage (2) pour le montage sur un véhicule tracteur, une barre stabilisatrice (3) reliée au chevalet de montage (2) et sur laquelle un châssis de charrue (6) portant deux rangées de corps de charrue (5) est disposé de manière à pouvoir tourner autour d'un axe de retournement horizontal par l'intermédiaire d'au moins un bras de retournement (7V), en particulier avant, dans laquelle sont disposés entre le châssis de charrue (6) et le bras de retournement (7V) un bras oscillant de décalage (9) relié de manière à pouvoir tourner au bras de retournement (7V) et un bras oscillant de sillon avant (10) relié d'une part de manière articulée au bras oscillant de décalage (9) et relié d'autre part de manière à pouvoir tourner au châssis de charrue (6), lesquels bras oscillants peuvent être amenés dans des positions entraînant différentes distances transversales (12, 120, 12F) entre le chevalet de montage (2) et le corps de charrue (5V) le plus en avant dans le sens de déplacement (F) par un actionneur de réglage (11), de sorte que la charrue réversible semi-portée (1) est équipée pour prendre au choix une position de travail de sillon et une position de travail sur le sol, **caractérisée en ce que** la charrue réversible semi-portée (1) comprend un actionneur de décalage (14) au moyen duquel le bras oscillant de décalage (9) et le bras oscillant de sillon avant (10) peuvent être amenés, indépendamment de la position de levage de l'actionneur de réglage (11), dans différentes positions entraînant différentes distances transversales (12, 120, 12F) entre le chevalet de montage (2) et le corps de charrue (5V) le plus en avant dans le sens de déplacement (F).

2. Charrue réversible semi-portée (1) selon la revendication 1,
**caractérisée en ce que** l'actionneur de décalage (14) est disposé entre le bras de retournement (7V), en particulier l'extrémité du bras de retournement (7V) reliée de manière à pouvoir tourner au bras oscillant de décalage (9), et le bras oscillant de décalage (9), en particulier l'extrémité du bras oscillant de décalage (9) reliée de manière articulée au bras oscillant de sillon avant (10).

3. Charrue réversible semi-portée (1) selon au moins l'une des revendications précédentes, **caractérisée en ce que** l'actionneur de réglage (11) est disposé entre le bras de retournement (7V), en particulier une extrémité du bras de retournement (7V) reliée à la barre stabilisatrice (3) de manière à pouvoir tourner autour d'un axe situé dans le sens de déplacement (F), et le bras oscillant de sillon avant (10), en particulier l'extrémité du bras oscillant de sillon avant (10) reliée de manière à pouvoir tourner au châssis de charrue (6).

4. Charrue réversible semi-portée (1) selon au moins l'une des revendications précédentes, **caractérisée en ce que** le châssis de charrue (6) est disposé sur la barre stabilisatrice (3) de manière à pouvoir tourner autour de l'axe de retournement horizontal par l'intermédiaire d'un autre bras de retournement (7H) arrière, en particulier relié à la barre stabilisatrice (3) de manière à pouvoir tourner autour d'un axe situé au moins approximativement dans le sens de déplacement (F), et du bras de retournement (7V) avant.

5. Charrue réversible semi-portée (1) selon au moins l'une des revendications précédentes, **caractérisée en ce que** les rangées de corps de charrue (5) sont réglables vis-à-vis de leur largeur de travail au moyen d'un actionneur de largeur de travail (15).

6. Charrue réversible semi-portée (1) selon les revendications 4 et 5,
**caractérisée en ce que** l'actionneur de largeur de travail (15) est disposé entre le bras de retournement (7H) arrière et le châssis de charrue (6).

7. Charrue réversible semi-portée (1) selon au moins l'une des revendications précédentes, **caractérisée en ce que** le châssis de charrue (6) peut pivoter autour d'un axe de pivotement transversal à l'axe de retournement dans une position de retournement avec une portée transversale réduite au moyen de l'actionneur de décalage (14) pour le processus de retournement.

8. Charrue réversible semi-portée (1) selon au moins l'une des revendications précédentes, **caractérisée en ce que** le châssis de charrue (6) peut pivoter autour d'un axe de pivotement transversal à l'axe de retournement dans une position de retournement avec une portée transversale réduite au moyen de l'actionneur de réglage (11) pour le processus de retournement.

9. Charrue réversible semi-portée (1) selon la revendication 7 ou 8,
**caractérisée en ce que** l'actionneur de décalage (14) et/ou l'actionneur de réglage (11) sont raccordés à l'alimentation en fluide sous pression d'au moins un actionneur de retournement (8) de telle sorte que, lorsque l'actionneur de retournement (8) est sollicité par une pression, l'actionneur de décalage (14) et/ou l'actionneur de réglage (11) sont tout d'abord sollicités par un fluide sous pression, de préférence jusqu'à ce qu'une position finale soit atteinte, avant que l'actionneur de retournement (8) ne soit sollicité par un fluide sous pression.

10. Charrue réversible semi-portée (1) selon au moins l'une des revendications précédentes, **caractérisée en ce qu'**une soupape d'arrêt est montée en amont de l'actionneur de décalage (14) et/ou de l'actionneur de réglage (11).

11. Charrue réversible semi-portée (1) selon la revendication 7, 8 ou 9 et 10, **caractérisée en ce que** la charrue réversible semi-portée (1) comprend un dispositif de commande de retournement relié à la soupape d'arrêt, **en ce que le** dispositif de commande de retournement est conçu pour maintenir l'actionneur de décalage (14) et/ou l'actionneur de réglage (11) dans leur position de levage au moyen de la soupape d'arrêt lorsqu'une position finale est atteinte et/ou pour libérer la soupape d'arrêt après le retournement du châssis de charrue (6) et pour solliciter ainsi l'actionneur de décalage (14) et/ou l'actionneur de réglage (11) par un fluide sous pression.

12. Charrue réversible semi-portée (1) selon au moins l'une des revendications précédentes, **caractérisée en ce que** le bras de retournement (7V), en particulier avant, le bras oscillant de décalage (9) et le bras oscillant de sillon avant (10) forment un mécanisme d'articulation (13) qui peut être placé dans des positions entraînant différentes distances transversales (12, 120, 12F) entre le chevalet de montage (2) et le corps de charrue (5V) le plus en avant dans le sens de déplacement (F), **en ce que** le mécanisme d'articulation (13) peut être amené en continu dans différentes positions de fin de course au moyen de l'actionneur de réglage (11) et de l'actionneur de décalage (14), indépendamment l'un de l'autre.

13. Charrue réversible semi-portée (1) selon la revendication 7,
**caractérisée en ce que** des moyens de limitation de course, lesquels limitent la plage de réglage de préférence à la moitié de la course exécutable, sont associés à l'actionneur de décalage (14), en particulier dans la position de travail sur le sol.

14. Charrue réversible semi-portée (1) selon au moins l'une des revendications précédentes, **caractérisée en ce que** l'actionneur de réglage (11) est réalisé sous la forme d'un vérin mémoire et présente un piston mémoire qui divise une chambre pour fluide sous pression de l'actionneur de réglage (11) en deux chambres pour fluide sous pression séparées et est en particulier conçu pour former une butée interne pour un piston relié à une tige de piston de l'actionneur de réglage (11),

15. Charrue réversible semi-portée (1) selon au moins l'une des revendications précédentes, **caractérisée en ce qu'**un élément d'amortissement, de préférence hydraulique, est associé à l'actionneur de réglage (11), **en ce que** l'actionneur de réglage (11) peut être maintenu de manière élastique dans sa position de levage contre l'élément d'amortissement, de préférence au moyen d'un robinet d'arrêt, en particulier dans la position de transport de la charrue réversible semi-portée (1).
